# FASCICULE DE BREVET EUROPEEN

(11) **EP 2 626 523 B1**
(45) Date de publication et mention de la délivrance du brevet: **14.09.2016**
(21) Numéro de dépôt: 13000458.3
(22) Date de dépôt: 31.01.2013
(51) Int. Cl.: F01D 25/28, F02C 7/32

(54) **Interface et procédé de montage entre un équipement et une source motrice tournante d'un groupe de motorisation équipant un giravion**
Schnittstelle und Montageverfahren zwischen einem Gerät und einer drehenden Antriebsquelle einer Motorenanlage in einem Drehflügelflugzeug
Assembly interface and method between a device and a rotating power source of an engine unit provided on a rotorcraft

(30) Priorité: 07.02.2012 FR 1200355
(43) Date de publication de la demande: 14.08.2013
(73) Titulaire: Airbus Helicopters, 13725 Marignane Cedex (FR)
(72) Inventeur: Catteau, Jean-Sébastien, 13100 Aix En Provence (FR); Merzoud, Manil, 13012 Marseille (FR)
(74) Mandataire: GPI & Associés

(56) Documents cités:
- DE-A1-102007 059 820
- US-A- 4 372 517

## Description

La présente invention est du domaine des aménagements pour giravion relevant des mécanismes d'assemblage entre une source motrice tournante et un équipement en prise tournante sur ladite source motrice. La source motrice est notamment munie d'un arbre moteur de mise en prise tournante sur un arbre de l'équipement.

La source motrice tournante comprend un groupe de motorisation muni notamment d'un moteur, tel qu'un turbomoteur participant par ailleurs à la sustentation voire à la propulsion du giravion.

L'équipement est par exemple une machine électrique réversible, alternateur-démarreur plus particulièrement.

Par exemple, un autre équipement est un appareil de refroidissement, radiateur à circulation de fluide ou analogue. Un autre équipement est par exemple encore une boîte de transmission formant une source motrice secondaire d'entraînement d'un accessoire du giravion, constituant un équipement secondaire entraîné à partir de la boîte de transmission.

D'autres applications du mécanisme d'assemblage sont possibles, telles qu'une interposition du mécanisme d'assemblage entre une source motrice formée par une boîte de transmission de puissance du groupe de motorisation, et un équipement formé par un accessoire équipant le giravion.

Les groupes de motorisation principale équipant les giravions sont logés dans des compartiments ménagés sur un châssis du giravion, un tel châssis étant parfois dénommé « plancher mécanique ».

Un giravion est susceptible d'être équipé d'un groupe de motorisation unique, mais est potentiellement équipé de deux groupes de motorisation. Dans ce cas, les groupes de motorisation sont logés dans des compartiments respectifs placés côte à côte.

Il est communément recherché de limiter l'encombrement des deux compartiments sur le giravion, avec pour conséquence une réduction de leur volume. L'espace disponible autour du groupe de motorisation installé à l'intérieur d'un dit compartiment est réduit au mieux. L'accès aux divers organes que comporte le groupe de motorisation en est rendu difficile, ce qui rend délicates les opérations de maintenance.

Un objectif à atteindre est de faciliter l'accès aux divers organes du groupe de motorisation par un opérateur, pour pouvoir effectuer à moindres coûts les opérations de maintenance en tout lieu et par un opérateur isolé travaillant seul. De telles opérations de maintenance résident notamment dans une maintenance des équipements.

Dans le cas d'un giravion équipé de plusieurs groupes de motorisation, ces groupes de motorisation présentent des architectures respectives similaires et sont disposés côte en côte suivant une même orientation, en étant logés dans des compartiments respectifs. De telles similitudes de structure et de position induisent des difficultés d'accès sélectif par effet miroir aux organes analogues que les groupes de motorisation comprennent respectivement. Les compartiments sont couramment accessibles par un opérateur à partir de leur soubassement, ce qui rend plus ou moins difficile l'accès aux mêmes organes fonctionnels respectifs des groupes de motorisation.

Il a été développé la notion d'élément avionique remplaçable ou LRU (d'après l'acronyme anglais Line Replacable Unit). Les LRU sont des structures fonctionnelles d'un ensemble mécanique ou électronique qui sont individuellement implantables sur un châssis porteur, facilitant les opérations de maintenance en escale. Dans le cadre des groupes de motorisation de giravion, de telles structures fonctionnelles correspondent aux équipements regroupés sur le turbomoteur.

La maintenance de tels équipements reste délicate en raison de leurs implantations respectives proches les unes des autres et à proximité des parois du compartiment, voire encore en raison de leur masse qui rend leur manipulation délicate par un opérateur isolé. Ainsi, le volume du compartiment est encombré par les ensembles fonctionnels qui rendent difficile leur accès individuel par un tel opérateur isolé et par suite augmente la durée d'une maintenance. Or, cela va à l'encontre des exigences des utilisateurs.

Il a aussi été développé la notion de composant sur étagère ou COTS (d'après l'acronyme anglais Commercial Off The Shelf), privilégiant l'utilisation de composants standardisés pour réduire les délais ainsi que les coûts de fabrication et de maintenance des produits. Il est opportun de mettre à profit cette notion lors de la conception d'un ensemble mécanique.

Il a encore été développé la notion d'interfaces de montage entre des organes à assembler, de type à montage rapide ou QAD (d'après l'acronyme anglais Quick Attach/Detach). De telles interfaces de montage mettent en oeuvre des ossatures respectivement affectées et fixées sur les organes à assembler, et des moyens de mise en coopération desdites ossatures entre elles pour leur jonction l'une à l'autre. La fixation des ossatures sur l'organe qui leur est affecté et la mise en coopération des ossatures entre elles, doivent répondre aux exigences d'assemblage desdits organes entre eux.

Dans le cadre d'une structuration de modalités de montage d'un équipement avec une source motrice tournante d'entraînement de cet équipement, il est opportun de prendre en compte les différentes notions susvisées (LRU ; COST ; QAD) et de satisfaire à leurs exigences. Il est aussi opportun de limiter voire de standardiser l'outillage à mettre en oeuvre pour effectuer des opérations de maintenance des équipements.

Il est connu des structures de montage d'un équipement sur une source motrice tournante qui tendent à satisfaire à de telles contraintes. On pourra par exemple se référer aux documents US6094797 (AIRCRAFT PARTS CORP) et US4372517 (LOCKHEED CORP). Les solutions proposées ne sont pas pleinement satisfaisantes et méritent d'être améliorées.

Il est aussi connu par le document DE 10 2007 059820 (INNOVATIVE WINDPOWER AG), d'utiliser des rails amovibles dans le cadre d'un centrage relatif entre des composants à assembler que comprend une machine électrique installée dans une nacelle d'éolienne.

Le but de la présente invention est de proposer une interface et un procédé de montage entre un équipement et une source motrice tournante d'un groupe de motorisation équipant un giravion.

Il est plus particulièrement visé par la présente invention de proposer une telle interface de montage et un tel procédé de montage répondant au mieux aux exigences et aux contraintes de maintenance précédemment exposées.

L'interface de la présente invention conformément à la revendication 1 est une interface de montage axial dédiée au montage axial d'un équipement sur une source motrice tournante d'un groupe de motorisation équipant un giravion pour l'entraînement en rotation de l'équipement. Ladite interface comprend une première ossature munie de premiers moyens de fixation dédiés à une fixation de la première ossature sur la source motrice, et une deuxième ossature munie de deuxièmes moyens de fixation dédiés à une fixation de la deuxième ossature sur l'équipement. Ladite interface comprend des moyens d'assemblage entre la première ossature et la deuxième ossature procurant leur maintien l'une à l'autre. De plus, l'interface est équipée de moyens de centrage de la première ossature et de la deuxième ossature entre elles.

Les moyens de centrage comprennent au moins un couple d'axes de montage portés parallèlement par la première ossature suivant une orientation axiale. Les axes de montage sont coopérants avec des fenêtres respectives que comporte la deuxième ossature, les axes de montage traversant lesdites fenêtres.

Les ossatures sont globalement planes, en étant essentiellement agencées en platines ou analogues prévues pour être placées en superposition en position de montage de l'équipement en prise sur la source motrice. La conformation globale des ossatures autorise leurs installations respectives en superposition axiale centrées respectivement sur la source motrice et sur l'équipement. Les ossatures comportent un axe médian orienté sensiblement perpendiculairement à leur plan général, ledit axe médian correspondant à l'axe de rotation de la source motrice et de l'équipement assemblés en prise tournante l'un à l'autre. Une dite orientation axiale correspond à une orientation parallèle à l'extension générale desdits axes médians et dudit axe de rotation en situation de montage de l'équipement sur la source motrice.

L'interface de la présente invention est principalement reconnaissable en ce que les axes de montage sont agencés en rails de soutien et de guidage axial de la deuxième ossature par rapport à la première ossature. Lesdits rails sont des éléments distincts de la première ossature, sur laquelle première ossature les rails sont aptes à être alternativement installés ou retirés. Plus particulièrement, les rails sont montés amovibles sur la première ossature par l'intermédiaire de moyens de jonction facilement réversibles. Les rails sont coopérants avec des fenêtres ouvertes de la deuxième ossature. Les ouvertures desdites fenêtres ménagent un débouché de passage transversal des rails à travers une fenêtre respective depuis l'extérieur.

Le caractère amovible des rails est tel qu'ils peuvent être attachés à la première ossature lors du montage et/ou de la séparation de la source motrice et de l'équipement l'un par rapport à l'autre, et être retirés en situation de montage effectif entre eux de l'équipement et de la source motrice. Le caractère amovible des rails et le caractère ouvert des fenêtres procurent aux rails une aptitude à être étendus suivant une orientation axiale sans induire de gêne ultérieure en dite situation de montage effectif de l'équipement sur la source motrice. Le caractère amovible des rails et le caractère ouvert des fenêtres procurent à la deuxième ossature porteuse de l'équipement l'aptitude à prendre prise sur les rails à partir d'une approche transversale depuis une quelconque zone axiale des rails.

La deuxième ossature est apte à être portée par les rails et à coulisser le long des rails depuis un quelconque emplacement axial de départ suivant l'orientation d'extension des rails. L'équipement muni de la deuxième ossature peut être approché des rails suivant une direction transversale à l'axe médian de la première ossature, et plus particulièrement à l'axe de rotation de la source motrice. Une telle approche est finalisée par une mise en prise en un dit quelconque emplacement axial de la deuxième ossature sur les rails, qui procurent alors un soutien à l'équipement soulageant l'opérateur de sa masse.

Il est à considérer que la structure de l'interface de montage exclue l'intégration desdits rails à la première ossature. Les rails montés amovibles sur la première ossature sont aptes à équiper ou non l'interface de montage, sélectivement pour effectuer les opérations de montage et de séparation de l'équipement par rapport à la source motrice et pour libérer l'interface de leur encombrement.

Selon une forme avantageuse de réalisation, une fenêtre ménage un appui basculant en soutien de l'équipement. Une autre fenêtre ménage un appui de butée à l'encontre dudit basculement.

L'opérateur exploite une fenêtre pour aisément déposer en soutien l'équipement sur un rail correspondant, sans gêne d'un éventuel obstacle, à partir d'une dite approche transversale à l'axe de rotation de la source motrice munie de la première ossature. L'opérateur soulagé de la masse de l'équipement l'accompagne en basculement jusqu'à la mise en butée de l'équipement contre l'autre rail, qui traverse la fenêtre correspondante à travers l'ouverture qu'elle comporte.

Selon une forme extrême de réalisation non préférée, la fenêtre ménageant l'appui de butée est susceptible d'être réduite à un plan d'appui du rail. Il est cependant préféré de former une telle fenêtre de butée en organe de soutien de la deuxième ossature porteuse de l'équipement en coopération avec l'autre fenêtre, pour éviter une mise en guingois et un blocage axial de l'équipement lors de son coulissement le long des rails.

Selon une forme préférée de réalisation, les rails sont montés sur des premières oreilles radialement périphériques que comporte la première ossature. Les fenêtres sont ménagées sur des deuxièmes oreilles radialement périphériques que comporte la deuxième ossature. Compte tenu de la structure de l'interface de montage, ces oreilles respectivement premières et deuxièmes sont placées en superposition axiale en situation de montage de la source motrice et de l'équipement en prise tournante l'un à l'autre.

Plus particulièrement, une deuxième oreille de soutien de l'équipement est agencée en crochet. Une autre deuxième oreille de butée en basculement de l'équipement est agencée en taquet. Les agencements respectivement en crochet et en taquet des deuxièmes oreilles de soutien sont issus de l'ouverture et des conformations des deuxièmes fenêtres ménagées dans lesdites deuxièmes oreilles, respectivement deuxième oreille de soutien et deuxième oreille de butée.

La mise en superposition des deuxièmes fenêtres et des premières fenêtres en situation de montage entre eux de la source motrice et de l'équipement, est mise à profit pour intégrer aux oreilles lesdits moyens d'assemblage. Il est à considérer qu'un jeu d'au moins une première oreille annexe et au moins une deuxième oreille annexe, exemptes respectivement de moyens de jonction aux rails et de fenêtres, est susceptible d'être exploité pour conforter le maintien entre elles de la première ossature et de la deuxième ossature par les moyens d'assemblage.

Plus particulièrement, lesdits moyens d'assemblage comprennent des moyens de mise en prises respectives entre elles de premières oreilles et de deuxièmes oreilles en regard les unes sur les autres. De tels moyens d'assemblage sont par exemple du type à liaison par boulonnage des premières oreilles et des deuxièmes oreilles entre elles, ou technique analogue de vissage mettant en oeuvre un organe d'assemblage par serrage axial des premières oreilles et des deuxièmes oreilles respectivement entre elles.

Selon des variantes de réalisation analogues, lesdits moyens de jonction facilement réversibles sont indifféremment du type à emboîtement ou du type par vissage. Ledit emboîtement est susceptible d'être un emboîtement du type élastiquement déformable, accessoirement complété ou mettant en oeuvre un organe d'attache élastiquement déformable en prise conjointe sur les rails et sur la première ossature. Les moyens de jonction sont des moyens connus en eux-mêmes de mise en prise facilement réversible entre les rails et la première ossature, en étant de structure suffisamment robuste pour procurer un simple soutien de l'équipement.

Les premiers moyens de fixation sont de préférence du type par vissage, mettant en oeuvre des organes de fixation en appui suivant une orientation axiale contre des semelles ménagées sur un plateau de la première ossature.

Les deuxièmes moyens de fixation sont par exemple du type à collier de serrage, voire encore du type par vissage ou par boulonnage, ou autre technique analogue mettant en oeuvre un organe d'assemblage par serrage indifféremment axial et/ou radial entre la deuxième ossature et l'équipement.

La présente invention a aussi pour objet un procédé d'assemblage conformément à la revendication 10 et un procédé de séparation conformément à la revendication 12 entre une source motrice et un équipement d'un groupe de motorisation équipant un giravion. Ledit procédé d'assemblage et ledit procédé de séparation mettent en oeuvre une interface de montage telle qu'elle vient d'être décrite. De tels procédés sont décrits plus loin, en relation avec un exemple de réalisation de la présente invention.

La présente invention a aussi pour objet un groupe de motorisation d'un giravion, comprenant au moins une source motrice, au moins un dit équipement et une interface de montage telle qu'elle vient d'être décrite. Ladite au moins une source motrice est en prise tournante sur ledit au moins un équipement par l'intermédiaire de ladite interface de montage.

Selon divers exemples, l'équipement est indifféremment une machine électrique réversible en prise tournante sur un moteur du groupe de motorisation, ou encore un accessoire en prise tournante sur une boîte de transmission entraînée par ledit moteur.

Un outillage de montage d'un équipement que comprend un groupe de motorisation d'un giravion de la présente invention est également décrit. Un tel outillage comprend au moins un couple de dits rails amovibles exploités pour le montage d'au moins un quelconque équipement en prise tournante sur une source motrice qui lui est affectée. Plus particulièrement, la source motrice étant potentiellement en prise tournante avec une pluralité d'équipements, un même jeu de rails est avantageusement exploité pour le montage des divers équipements en prise tournante sur la source motrice,

Un exemple de réalisation de la présente invention va être décrit en relation avec les figures des planches annexées, dans lesquelles :
- la fig.1 est une illustration assemblée en perspective d'une interface de montage selon un exemple préféré de réalisation de la présente invention.
- la fig.2 est une illustration en perspective éclatée d'une source motrice et d'un équipement assemblés entre eux par l'intermédiaire d'une interface de montage représentée sur la fig.1.

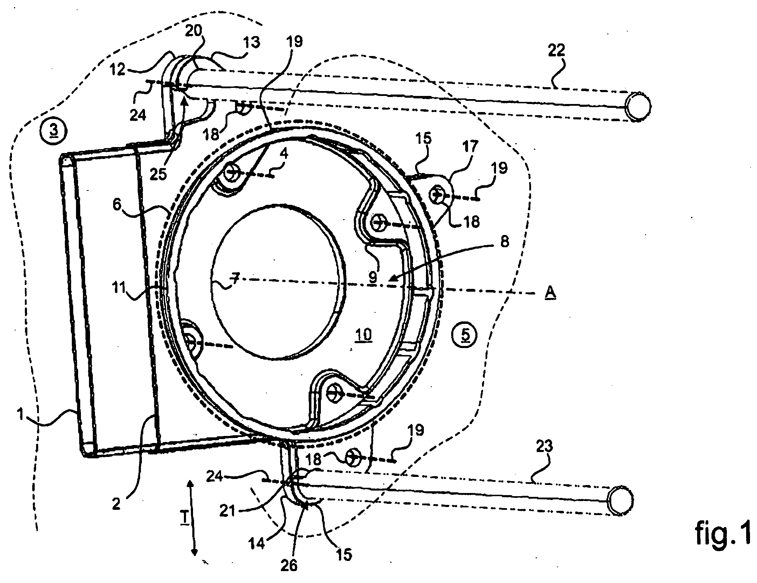

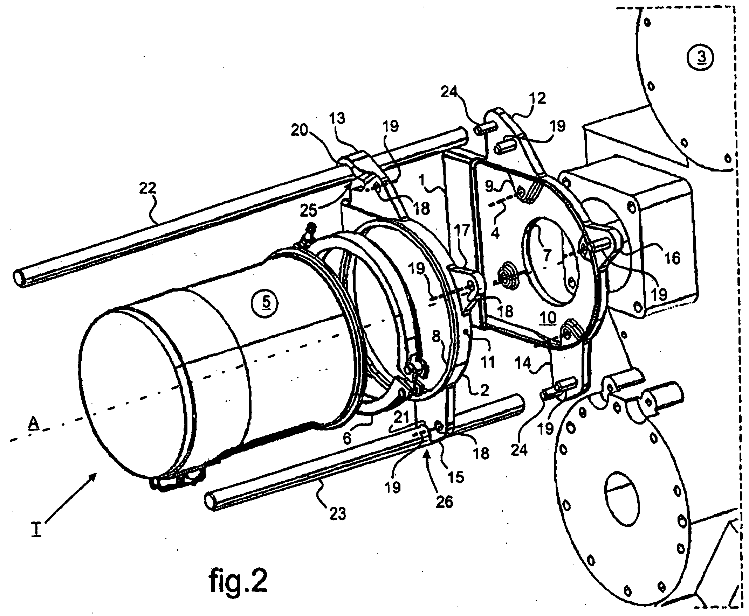

Sur la fig.1 et la fig.2, une interface de montage comprend deux ossatures 1, 2 globalement planes agencées pour être axialement fixées l'une à l'autre. Une première ossature 1 est destinée à être fixée sur une source motrice 3 par des premiers moyens de fixation 4 de type par vissage. Une deuxième ossature 2 est destinée à être fixée sur un équipement 5 par des deuxièmes moyens de fixation 6 de type à collier de serrage.

La première ossature 1 et la deuxième ossature 2 comportent des évidements axiaux 7, 8 respectifs destinés à être placés en regard l'un sur l'autre lorsque les ossatures 1, 2 sont assemblées l'une à l'autre en situation de montage effectif de l'équipement 5 sur la source motrice 3. De tels évidements 7, 8 forment un passage pour un arbre de l'équipement 5, en vue de sa mise en prise en rotation avec un arbre de la source motrice 3.

Les premiers moyens de fixation 4 prennent appuis contre des semelles 9 que comporte la première ossature 1. Les semelles 9 sont ménagées sur un plateau 10 de la première ossature 1, en bordure de l'évidement axial 7 de la première ossature 1. Le collier de serrage formant les deuxièmes moyens de fixation 6 est en prise conjointe sur l'équipement 5 et sur un fût 11 que comporte la deuxième ossature 2.

Les ossatures 1, 2 comportent chacune des oreilles 12, 14, 16 et 13, 15, 17 radialement périphériques, à travers lesquelles oreilles 12, 13, 14 et 15, 16, 17 sont ménagés des orifices de passage de moyens d'assemblage 19, tels que des boulons de fixation ou des fûts de réception d'une vis, ou analogue. En situation de montage effectif de l'équipement 5 sur la source motrice 3, des premières oreilles 12, 14, 16 de la première ossature 1 sont en superposition et appui axial sur des deuxièmes oreilles 13, 15, 17 correspondantes de la deuxième ossature 2. Les moyens d'assemblage 19 procurent un maintien de l'équipement 5 muni de la deuxième ossature 2, sur la source motrice 3 munie de la première ossature 1.

La deuxième ossature 2 comporte une oreille de soutien 13 et une oreille de butée 15, chacune munie de fenêtres 20, 21 de passage de rails 22, 23. Les rails 22, 23 sont des outils escamotables de l'interface de montage, que comprend un outillage de montage de l'équipement 5 sur la source motrice 3. Des moyens de jonction facilement réversibles 24, tels que par vissage, permettent de monter temporairement les rails 22, 23 sur la première ossature 1. Les fenêtres 20, 21 sont latéralement ouvertes, le débouché des ouvertures 25, 26 latérales respectives des fenêtres 20, 21 formant un passage transversal des rails 22, 23 à travers les fenêtres 20, 21 depuis leur environnement extérieur. Une fenêtre 20 allongée est ménagée sur l'oreille de soutien 13 lui conférant un agencement en crochet. Une échancrure formant la fenêtre 21 de l'oreille de butée 15 lui confère un agencement en taquet de réception d'un rail 23.

L'interface de montage est mise en oeuvre conformément à un procédé d'assemblage entre une source motrice 3 et un équipement 5 selon les opérations suivantes effectuées par un opérateur pour :
- ) fixer la première ossature 1 et la deuxième ossature 2 respectivement à la source motrice 3 et à l'équipement 5, par l'intermédiaire respectivement des premiers moyens de fixation 4 et des deuxièmes moyens de fixation 6, la source motrice 3 et l'équipement 5 étant avantageusement équipés en atelier respectivement de la première ossature 1 et de la deuxième ossature 2.
- ) joindre les rails 22, 23 à la première ossature 1 par l'intermédiaire des moyens de jonction facilement réversibles 24.
- ) approcher l'équipement 5 muni de la deuxième ossature 2 vers les rails 22,23, suivant une direction transversale T à la direction axiale A d'extension de la source motrice 3 et de l'équipement 5.
- ) crocheter par gravité l'équipement 5 sur un rail 22 par l'intermédiaire d'une fenêtre de soutien 20, et laisser basculer l'équipement 3 sous l'effet de sa propre masse en appui contre l'autre rail 23 par l'intermédiaire d'une fenêtre de butée 21, la fenêtre de soutien 20 étant notamment une fenêtre considérée comme supérieure au regard de ladite direction d'approche transversale T de l'équipement 5 vers la source motrice 3, et au regard de l'orientation radiale de montage de la première ossature 1 sur la source motrice 3, la fenêtre de butée 21 étant une fenêtre ménagée en décalage radial par rapport à la fenêtre de soutien 20.
- ) faire coulisser axialement l'équipement 5 soutenu et guidé par les rails 22, 23 depuis une position distante l'une de l'autre de la première ossature 1 et de la deuxième ossature 2, vers une position d'assemblage dans laquelle l'équipement 5 est en prise tournante sur la source motrice 3 et dans laquelle la première ossature 1 et la deuxième ossature 2 sont en contact axial, ladite position distante étant à considérer comme étant une quelconque position axiale de départ de l'équipement 5 installé par soutien sur les rails 22, 23.
- ) solidariser la première ossature 1 et la deuxième ossature 2 par l'intermédiaire des moyens d'assemblage 19.
- ) retirer les rails 22, 23 de la première ossature 1 par rupture de la jonction procurée par les moyens de jonction facilement réversible 24.

L'opération de coulissement axial de l'équipement 5 comprend de préférence les étapes suivantes :
- ) amener par coulissement axial le long des rails 22, 23 l'équipement 5 vers la source motrice 3, jusqu'à mise en prise tournante entre eux d'un arbre de l'équipement 5 et d'un arbre de la source motrice 3.
- ) en cas échéant d'un déphasage radial entre la source motrice 3 et l'équipement 5, éloigner axialement l'équipement de la source motrice 3 et ajuster par rotation la position radiale de l'arbre de l'équipement 5, ledit éloignement axial étant apte à autoriser le passage entre la première ossature 1 et la deuxième ossature 2 d'un outil d'entraînement en rotation de l'arbre de l'équipement 5 par l'opérateur, un tel outil étant apte à être formé d'un instrument adapté et/ou de la main de l'opérateur.
- ) renouveler ladite étape d'amenée par coulissement axial de l'équipement 5 vers la source motrice 3 et en cas de dite mise en prise tournante, finaliser l'approche axiale de l'équipement 5 vers la source motrice 3 en position d'assemblage.

L'interface de montage est mise en oeuvre conformément à un procédé de séparation entre la source motrice 3 et un équipement 5 selon les opérations suivantes effectuées par un opérateur :
- ) glisser les rails 22, 23 à travers les fenêtres 20, 21 correspondantes, et joindre les rails 22, 23 à la première ossature 1 par l'intermédiaire des moyens de jonction facilement réversible 24.
- ) séparer d'entre elles la première ossature 1 et la deuxième ossature 2 par rupture de prise des moyens d'assemblage 19.
- ) repousser l'équipement 5 de la source motrice 3 par coulissement axial de l'équipement 5 le long des rails 22, 23.
- ) retirer par décrochage l'équipement 5 et l'éloigner transversalement T de la source motrice 3.

## Revendications

1. Interface de montage axial dédiée au montage axial d'un équipement (5) sur une source motrice (3) tournante d'un groupe de motorisation équipant un giravion, ladite interface comprenant une première ossature (1) munie de premiers moyens de fixation (4) dédiés à une fixation de la première ossature (1) sur la source motrice (3), une deuxième ossature (2) munie de deuxièmes moyens de fixation (6) dédiés à une fixation de la deuxième ossature (2) sur l'équipement (5), des moyens d'assemblage (19) entre la première ossature (1) et la deuxième ossature (2) procurant leur solidarisation l'une à l'autre, des moyens de centrage de la première ossature (1) et de la deuxième ossature (2) entre elles comprenant au moins un couple d'axes de montage portés parallèlement par la première ossature (1) suivant une orientation axiale, les axes de montage coopérant avec des fenêtres (20, 21) respectives que comporte la deuxième ossature (2),
**caractérisée en ce que** les axes de montage sont agencés en rails (22, 23) de soutien et de guidage axial de la deuxième ossature (2) par rapport à la première ossature (1), lesdits rails (22, 23) étant montés amovibles sur la première ossature (1) par l'intermédiaire de moyens de jonction facilement réversibles (24) et coopérant avec des fenêtres (20, 21) ouvertes de la deuxième ossature (2), des ouvertures (25, 26) desdites fenêtres (20, 21) ménageant un débouché de passage transversal des rails à travers une fenêtre respective depuis l'extérieur.

2. Interface de montage selon la revendication 1,
**caractérisée en ce qu'**une fenêtre (20) ménage un appui basculant en soutien de l'équipement (5), une autre fenêtre (21) ménageant un appui de butée à l'encontre dudit basculement.

3. Interface de montage selon l'une quelconque des revendications 1 à 2,
**caractérisée en ce que** les rails (22, 23) sont montés sur des premières oreilles (12, 14) périphériques que comporte la première ossature (1), et **en ce que** les fenêtres (20, 21) sont ménagées sur des deuxièmes oreilles (13, 15), périphériques que comporte la deuxième ossature (2).

4. Interface de montage selon la revendication 3,
**caractérisée en ce qu'**une deuxième oreille de soutien (13) de l'équipement (5) est agencée en crochet et **en ce qu'**une deuxième oreille de butée (15) en basculement de l'équipement (5) est agencée en taquet.

5. Interface de montage selon l'une quelconque des revendications 3 et 4,
**caractérisée en ce que** lesdits moyens d'assemblage (19) comprennent des moyens de mise en prises respectives entre elles de premières oreilles (12, 14, 16) et de deuxièmes oreilles (13, 15, 17) en regard les unes sur les autres.

6. Interface de montage selon l'une quelconque des revendications 3 à 5,
**caractérisée en ce que** les moyens d'assemblage (19) sont du type à liaison par boulonnage des premières oreilles (12, 14, 16) et des deuxièmes oreilles (13, 15, 17) entre elles.

7. Interface de montage selon l'une quelconque des revendications 1 à 6,
**caractérisée en ce que** lesdits moyens de jonction facilement réversibles (24) sont indifféremment du type à emboîtement ou du type par vissage.

8. Interface de montage selon l'une quelconque des revendications 1 à 7,
**caractérisée en ce que** les premiers moyens de fixation (4) sont du type par vissage, mettant en oeuvre des organes de fixation en appui suivant une orientation axiale contre des semelles (9) ménagées sur un plateau (10) de la première ossature (1).

9. Interface de montage selon l'une quelconque des revendications 1 à 8,
**caractérisée en ce que** les deuxièmes moyens de fixation (6) sont du type à collier de serrage.

10. Procédé d'assemblage entre une source motrice (3) et un équipement (5) d'un groupe de motorisation équipant un giravion, ledit procédé d'assemblage mettant en oeuvre une interface de montage selon l'une quelconque des revendications 1 à 9,
**caractérisée en ce que** le procédé d'assemblage comprend les opérations suivantes :
- ) fixer la première ossature (1) et la deuxième ossature (2) respectivement à la source motrice (3) et à l'équipement (5), par l'intermédiaire respectivement des premiers moyens de fixation (4) et des deuxièmes moyens de fixation (6),
- ) joindre les rails (22, 23) à la première ossature (1) par l'intermédiaire des moyens de jonction facilement réversibles (24),
- ) approcher l'équipement (5) muni de la deuxième ossature (2) vers les rails (22, 23) suivant une direction transversale (T) à la direction axiale (A) d'extension de la source motrice (3) et de l'équipement (5),
- ) crocheter par gravité l'équipement (5) sur un rail (22) par l'intermédiaire d'une fenêtre de soutien (20), et laisser basculer l'équipement (5) sous l'effet de sa propre masse en appui contre l'autre rail (23) par l'intermédiaire d'une fenêtre de butée (15),
- ) faire coulisser axialement l'équipement (5) soutenu et guidé par les rails (22, 23) depuis une position distante l'une de l'autre de la première ossature (1) et de la deuxième ossature (2), vers une position d'assemblage dans laquelle l'équipement (5) est en prise tournante sur la source motrice (3) et dans laquelle la première ossature (1) et la deuxième ossature (2) sont en contact axial,
- ) solidariser la première ossature (1) et la deuxième ossature (2) par l'intermédiaire des moyens d'assemblage (19),
- ) retirer les rails (22, 23) de la première ossature (1) par rupture de la jonction procurée par les moyens de jonction facilement réversible (24).

11. Procédé d'assemblage selon la revendication 10,
**caractérisée en ce que** l'opération de coulissement axial de l'équipement (5) comprend les étapes suivantes :
- ) amener par coulissement axial le long des rails (22,23) l'équipement (5) vers la source motrice (3), jusqu'à mise en prise tournante entre eux d'un arbre de l'équipement (5) et d'un arbre de la source motrice (3),
- ) en cas échéant d'un déphasage radial entre la source motrice (3) et l'équipement (5), éloigner axialement l'équipement de la source motrice (3) et ajuster par rotation la position radiale de l'arbre de l'équipement (5),
- ) renouveler ladite étape d'amenée par coulissement axial de l'équipement (5) vers la source motrice (3) et en cas de dite mise en prise tournante, finaliser l'approche axiale de l'équipement (5) vers la source motrice (3) en position d'assemblage.

12. Procédé de séparation entre une source motrice et un équipement d'un groupe de motorisation équipant un giravion, ledit procédé de séparation mettant en oeuvre une interface de montage selon l'une quelconque des revendications 1 à 9,
**caractérisée en ce que** le procédé de séparation comprend les opérations suivantes :
- ) glisser les rails (22, 23) à travers les fenêtres (20, 21) correspondantes et joindre les rails (22, 23) à la première ossature (1) par l'intermédiaire des moyens de jonction facilement réversibles (24),
- ) séparer d'entre elles la première ossature (1) et la deuxième ossature (2) par rupture de prise des moyens d'assemblage (19),
- ) repousser l'équipement (5) de la source motrice (3) par coulissement axial de l'équipement le long des rails (22, 23),
- ) retirer par décrochage l'équipement (5) et l'éloigner transversalement de la source motrice (3).

13. Groupe de motorisation d'un giravion comprenant au moins une source motrice (3), au moins un dit équipement (5) et une interface de montage selon l'une quelconque des revendications 1 à 9, ladite au moins une source motrice (3) étant en prise tournante sur ledit au moins un équipement (5) par l'intermédiaire de ladite interface de montage.

14. Groupe de motorisation d'un giravion selon la revendication 13,
**caractérisé en ce que** l'équipement (5) est indifféremment une machine électrique réversible en prise tournante sur un moteur du groupe de motorisation, ou un accessoire en prise tournante sur une boîte de transmission de puissance.

## Patentansprüche

1. Axialmontage-Schnittstelle für die axiale Montage einer Ausrüstung (5) an einer sich drehenden Antriebsquelle (3) einer Motorenanlage eines Drehflügelflugzeugs, wobei die Schnittstelle aufweist: eine erste Tragkonstruktion (1) mit ersten Befestigungsmitteln (4) für eine Befestigung der ersten Tragkonstruktion (1) an der Antriebsquelle (3), eine zweite Tragkonstruktion (2) mit zweiten Befestigungsmitteln (6) für eine Befestigung der zweiten Tragkonstruktion (2) an der Ausrüstung (5), Montagemittel (19) zwischen der ersten Tragkonstruktion (1) und der zweiten Tragkonstruktion (2), die deren Befestigung aneinander sicherstellen, Mittel zur Zentrierung der ersten Tragkonstruktion (1) und der zweiten Tragkonstruktion (2) zueinander, die mindestens ein Paar Montageachsen aufweisen, die parallel durch die erste Tragkonstruktion (1) in einer axialen Ausrichtung getragen werden, wobei die Montageachsen mit jeweiligen Fenstern (20, 21), die die zweite Tragkonstruktion (2) aufweist, zusammenwirken,
**dadurch gekennzeichnet, dass** die Montageachsen sich aus Schienen (22, 23) zum Tragen und zur axialen Führung der zweiten Tragkonstruktion (2) bezüglich der ersten Tragkonstruktion (1) zusammensetzen, wobei die Schienen (22, 23) abnehmbar auf der ersten Tragkonstruktion (1) über leicht umkehrbare Verbindungsmittel (24) montiert sind und mit den offenen Fenstern (20, 21) der zweiten Tragkonstruktion (2) zusammenwirken, wobei Öffnungen (25, 26) der Fenster (20, 21) einen quer verlaufenden Ausgangsdurchgang für die Schienen durch ein jeweiliges Fenster von außen her bilden.

2. Montageschnittstelle nach Anspruch 1,
**dadurch gekennzeichnet, dass** ein Fenster (20) eine verschwenkbare Stütze zur Halterung der Ausrüstung (5) bildet, wobei das andere Fenster (21) einen Anschlag gegen diese Schwenkbewegung bildet.

3. Montageschnittstelle nach einem der Ansprüche 1 bis 2,
**dadurch gekennzeichnet, dass** die Schienen (22, 23) auf ersten Umfangsflügeln (12, 14), die die erste Tragkonstruktion (1) aufweist, montiert sind, und dadurch, dass die Fenster (20, 21) in die zweiten Umfangsflügel (13, 15), die die zweite Tragkonstruktion (2) aufweist, eingearbeitet sind.

4. Montageschnittstelle nach Anspruch 3,
**dadurch gekennzeichnet, dass** ein zweiter Flügel (13) zum Tragen der Ausrüstung (5) hakenförmig ausgebildet ist, und dadurch, dass ein zweiter Anschlagsflügel (15) gegenüber einem Verschwenken der Ausrüstung (5) als Verriegelung ausgebildet ist.

5. Montageschnittstelle nach einem der Ansprüche 3 und 4,
**dadurch gekennzeichnet, dass** die Montagemittel (19) Mittel für den jeweiligen Eingriff der ersten Flügel (12, 14, 16) und der zweiten Flügel (13, 15, 17) ineinander aufweisen.

6. Montageschnittstelle nach einem der Ansprüche 3 bis 5,
**dadurch gekennzeichnet, dass** die Montagemittel (19) vom Typ einer Bolzenverbindung der ersten Flügel (12, 14, 16) und der zweiten Flügel (13, 15, 17) miteinander sind.

7. Montageschnittstelle nach einem der Ansprüche 1 bis 6,
**dadurch gekennzeichnet, dass** die leicht umkehrbaren Verbindungsmittel (24) vom Muffenverbindungstyp oder vom Verschraubungstyp sind.

8. Montageschnittstelle nach einem der Ansprüche 1 bis 7,
**dadurch gekennzeichnet, dass** die ersten Befestigungsmittel (4) vom Verschraubungstyp sind, die die Befestigungselemente in axialer Richtung gegen Lagerplatten (9), die auf einer Platte (10) der ersten Tragkonstruktion (1) angeordnet sind, andrücken.

9. Montageschnittstelle nach einem der Ansprüche 1 bis 8,
**dadurch gekennzeichnet, dass** die zweiten Befestigungsmittel (6) vom Typ einer Klemmschelle sind.

10. Montageverfahren zwischen einer Antriebsquelle (3) und einer Ausrüstung (5) einer Motorgruppe, mit der ein Drehflügelflugzeug ausgerüstet ist, wobei das Montageverfahren eine Montageschnittstelle nach einem der Ansprüche 1 bis 9 verwendet,
dadurch gekenntzeichnet, dass das Montageverfahren die folgenden Schritte aufweist:
- ) Befestigen der ersten Tragkonstruktion (1) und der zweiten Tragkonstruktion (2) jeweils an der Antriebsquelle (3) und an der Ausrüstung (5) jeweils über erste Befestigungsmittel (4) und zweite Befestigungsmittel (6),
- ) Anfügen der Schienen (22, 23) an der ersten Tragkonstruktion (1) über leicht umkehrbare Verbindungsmittel (24),
- ) Annähern der mit der zweiten Tragkonstruktion (2) versehenen Ausrüstung (5) an die Schienen (22, 23) entlang einer Querrichtung (T) bezüglich der axialen Erstreckungsrichtung (A) der Antriebsquelle (3) und der Ausrüstung (5),
- ) Einfädeln der Ausrüstung (5) auf eine Schiene (22) durch die Einwirkung der Schwerkraft mittels eines Trägerfensters (20) und Schwingenlassen der Ausrüstung (5) unter der Einwirkung ihres eigenen Gewichts im Anschlag gegen die andere Schiene (23) über ein Anschlagsfenster (15),
- ) axiales Gleitenlassen der Ausrüstung (5), die von den Schienen (22, 23) gestützt und ausgehend von einer Stellung, in der die erste Tragkonstruktion (1) und die zweite Tragkonstruktion (2) voneinander beabstandet sind, in eine Montagestellung geführt ist, in der die Ausrüstung (5) sich in drehendem Eingriff mit der Antriebsquelle (3) befindet und in der die erste Tragkonstruktion (1) und die zweite Tragkonstruktion (2) in axialem Kontakt stehen,
- ) Aneinander-Befestigen der ersten Tragkonstruktion (1) und der zweiten Tragkonstruktion (2) mittels Montagemitteln (19),
- ) Entfernen der Schienen (22, 23) der ersten Tragkonstruktion durch Trennen der Verbindung, die durch die leicht umkehrbaren Verbindungsmittel (24) hergestellt wurde.

11. Montageverfahren nach Anspruch 10,
**dadurch gekennzeichnet, dass** der Schritt des axialen Gleitens der Ausrüstung (5) folgende Schritte aufweist:
- ) Heranführen der Ausrüstung (5) durch axiales Gleiten entlang der Schienen (22, 23) an die Antriebsquelle (3) bis zum drehenden Eingriff einer Welle der Ausrüstung (5) und einer Welle der Antriebsquelle (3) ineinander,
- ) gegebenenfalls eine radiale Phasenverschiebung zwischen der Antriebsquelle (3) und der Ausrüstung (5), axiales Entfernen der Ausrüstung von der Antriebsquelle (3) und Justierung durch Drehung der radialen Lage der Welle der Ausrüstung (5),
- ) Wiederholen des Schrittes des Annäherns der Ausrüstung (5) an die Antriebsquelle (3) durch axiales Gleiten und, im Falle des Dreheingriffs, Beenden der axialen Annäherung der Ausrüstung (5) an die Antriebsquelle (3) in der Montagestellung.

12. Verfahren zum Trennen einer Antriebsquelle von einer Ausrüstung einer Motorengruppe, mit der ein Drehflügelflugzeug ausgerüstet ist, wobei das Trennverfahren eine Montageschnittstelle nach einem der Ansprüche 1 bis 9 verwendet,
**dadurch gekennzeichnet, dass** das Trennverfahren die folgenden Schritte aufweist:
- ) Gleitenlassen der Schienen (22, 23) durch die entsprechenden Fenster (20, 21) und Verbinden der Schienen (22, 23) mit der ersten Tragkonstruktion (1) über leicht umkehrbare Verbindungsmittel (24),
- ) Trennen der ersten Tragkonstruktion (1) von der zweiten Tragkonstruktion (2) durch Trennen des Eingriffs der Montagemittel (19),
- ) Wegschieben der Ausrüstung (5) von der Antriebsquelle (3) durch axiales Gleitenlassen der Ausrüstung entlang der Schienen (22, 23),
- ) Entfernen der Ausrüstung (5) durch Lösen und Abrücken von der Antriebsquelle (3) in Querrichtung.

13. Motorengruppe eines Drehflügelflugzeugs mit mindestens einer Antriebsquelle (3), mindestens einer besagte Ausrüstung (5) und einer Montageschnittstelle nach einem der Ansprüche 1 bis 9, wobei die mindestens eine Antriebsquelle (3) mit der mindestens einen Ausrüstung (5) über die Montageschnittstelle in Dreheingriff steht.

14. Motorengruppe eines Drehflügelflugzeugs nach Anspruch 13,
**dadurch gekennzeichnet, dass** die Ausrüstung (5) eine reversible elektrische Maschine ist, die in Dreheingriff mit einem Motor der Motorengruppe steht, oder ein Zubehörteil, das in Dreheingriff mit einem Leistungsgetriebe steht.

## Claims

1. Axial mounting interface dedicated to the axial mounting of a piece of equipment (5) on a rotary drive source (3) of a power plant with which a rotorcraft is equipped, said interface comprising a first frame (1) provided with first fastening means (4) dedicated to fastening the first frame (1) to the drive source (3), a second frame (2) provided with second fastening means (6) dedicated to fastening the second frame (2) to the piece of equipment (5), assembly means (19) between the first frame (1) and the second frame (2) providing their securing to one another, means for mutually centring the first frame (1) and the second frame (2), comprising at least one pair of mounting shafts carried in parallel by the first frame (1) in an axial orientation, the mounting shafts cooperating with respective windows (20, 21) which the second frame (2) comprises,
**characterised in that** the mounting shafts are arranged as rails (22, 23) for supporting and axially guiding the second frame (2) relative to the first frame (1), said rails (22, 23) being removably mounted on the first frame (1) via easily-reversible junction means (24) and cooperating with open windows (20, 21) of the second frame (2), openings (25, 26) of said windows (20, 21) providing an opening for the rails to pass transversely through a respective window from the outside.

2. Mounting interface according to claim 1,
**characterised in that** one window (20) provides a swinging support for supporting the piece of equipment (5), another window (21) providing an abutment support against said swinging.

3. Mounting interface according to any one of claims 1 to 2,
**characterised in that** the rails (22, 23) are mounted on first peripheral lugs (12, 14) which the first frame (1) comprises, and **in that** the windows (20, 21) are provided on second peripheral lugs (13, 15) which the second frame (2) comprises.

4. Mounting interface according to claim 3,
**characterised in that** a second support lug (13) for supporting the piece of equipment (5) is arranged as a hook and **in that** a second abutment lug (15) for abutment on swinging of the piece of equipment (5) is arranged as a stop.

5. Mounting interface according to any one of claims 3 and 4,
**characterised in that** said assembly means (19) comprise means for mutual respective engagement of first lugs (12, 14, 16) and second lugs (13, 15, 17) facing one another.

6. Mounting interface according to any one of claims 3 to 5,
**characterised in that** the assembly means (19) are of the type for connection by bolting the first lugs (12, 14, 16) and the second lugs (13, 15, 17) to one another.

7. Mounting interface according to any one of claims 1 to 6,
**characterised in that** said easily-reversible junction means (24) are either of the fitting type or of the screwing type.

8. Mounting interface according to any one of claims 1 to 7,
**characterised in that** the first fastening means (4) are of the screwing type, implementing supporting fastening members in an axial orientation against soles (9) provided on a plate (10) of the first frame (1).

9. Mounting interface according to any one of claims 1 to 8,
**characterised in that** the second fastening means (6) are of the clamping-collar type.

10. Assembly method between a drive source (3) and a piece of equipment (5) of a power plant with which a rotorcraft is equipped, said assembly method implementing a mounting interface according to any one of claims 1 to 9,
**characterised in that** the assembly method comprises the following operations:
- ) fastening the first frame (1) and the second frame (2) respectively to the drive source (3) and to the piece of equipment (5), via respectively the first fastening means (4) and the second fastening means (6),
- ) joining the rails (22, 23) to the first frame (1) via the easily-reversible junction means (24),
- ) moving the piece of equipment (5) fitted with the second frame (2) towards the rails (22, 23) in a direction (T) transverse to the axial direction (A) in which the drive source (3) and the piece of equipment (5) extend,
- ) hooking the piece of equipment (5) by gravity on a rail (22) via a support window (20), and allowing the piece of equipment (5) to swing under the effect of its own mass to bear against the other rail (23) via an abutment window (15),
- ) causing the piece of equipment (5) supported and guided by the rails (22, 23) to slide axially from a position in which the first frame (1) and the second frame (2) are spaced apart from each other towards an assembly position in which the piece of equipment (5) is rotatably engaged on the drive source (3) and in which the first frame (1) and the second frame (2) are axially in contact,
- ) securing the first frame (1) and the second frame (2) together via the assembly means (19),
- ) removing the rails (22, 23) from the first frame (1) by breaking the junction provided by the easily-reversible junction means (24).

11. Assembly method according to claim 10,
**characterised in that** the operation of sliding the piece of equipment (5) axially comprises the following steps:
- ) bringing the piece of equipment (5) towards the drive source (3) by sliding axially along the rails (22,23) until a shaft of the piece of equipment (5) and a shaft of the drive source (3) are in mutual rotary engagement,
- ) in the event of a radial offset between the drive source (3) and the piece of equipment (5), moving the piece of equipment axially away from the drive source (3) and adjusting by rotation the radial position of the shaft of the piece of equipment (5),
- ) repeating said step of bringing the piece of equipment (5) towards the drive source (3) by sliding axially and in the event of said rotary engagement, finalising the axial approach of the piece of equipment (5) towards the drive source (3) into the assembled position.

12. Separation method between a drive source and a piece of equipment of a power plant with which a rotorcraft is equipped, said separation method implementing a mounting interface according to any one of claims 1 to 9,
**characterised in that** the separation method comprises the following operations:
- ) sliding the rails (22, 23) through the corresponding windows (20, 21) and joining the rails (22, 23) to the first frame (1) via the easily-reversible junction means (24),
- ) mutually separating the first frame (1) and the second frame (2) by disengaging the assembly means (19),
- ) pushing the piece of equipment (5) away from the drive source (3) by sliding the piece of equipment (5) axially along the rails (22, 23),
- ) removing the piece of equipment (5) by unhooking it and moving it away from the drive source (3) transversely.

13. Rotorcraft power plant comprising at least one drive source (3), at least one said piece of equipment (5) and a mounting interface according to any one of claims 1 to 9, said at least one drive source (3) being in rotary engagement with said at least one piece of equipment (5) via said mounting interface.

14. Rotorcraft power plant according to claim 13,
**characterised in that** the piece of equipment (5) is either a reversible electrical machine in rotary engagement with an engine of the power plant, or an accessory in rotary engagement with a power transmission gearbox.
